**Europäisches Patentamt**

**European Patent Office**

**Office européen des brevets**

(19)

(11) Veröffentlichungsnummer : **0 334 413 B1**

(12) **EUROPÄISCHE PATENTSCHRIFT**

(45) Veröffentlichungstag der Patentschrift :
25.11.92 Patentblatt 92/48

(21) Anmeldenummer : **89200485.4**

(22) Anmeldetag : **27.02.89**

(51) Int. Cl.⁵ : **C04B 18/02,** A62D 3/00,
// F27B21/06

(54) **Verfahren zur Herstellung von festen Agglomeraten aus mineralischen Schlämmen.**

(30) Priorität : **19.03.88 DE 3809358**

(43) Veröffentlichungstag der Anmeldung :
**27.09.89 Patentblatt 89/39**

(45) Bekanntmachung des Hinweises auf die
Patenterteilung :
**25.11.92 Patentblatt 92/48**

(84) Benannte Vertragsstaaten :
**BE DE ES FR IT NL**

(56) Entgegenhaltungen :
**BE-A- 503 380**

(56) Entgegenhaltungen :
**DE-A- 3 602 562**
**FR-A- 1 048 766**
**GB-A- 404 863**
**GB-A- 709 845**

(73) Patentinhaber : **METALLGESELLSCHAFT AG**
**Reuterweg 14 Postfach 3724**
**W-6000 Frankfurt/M.1 (DE)**

(72) Erfinder : **Cappel, Fred, Dr.**
**Schopenhauer Strasse 13**
**W-6072 Dreieich (DE)**
Erfinder : **Stieger, Walter**
**Grenzstrasse 100**
**W-6050 Offenbach am Main (DE)**

## Beschreibung

Die Erfindung betrifft ein Verfahren zur Herstellung von festen Agglomeraten aus stichfesten mineralischen Schlämmen, die organische Bestandteile bis zu etwa 10 % enthalten, wobei der stichfeste Schlamm mit trockenem Rückgut in einem solchen Verhältnis gemischt wird, daß der Wassergehalt der Mischung einen für eine Pelletierung günstigen Wert erreicht und daß der Gehalt an organischen Bestandteilen in den Pellets bei vollständiger Verbrennung in der Produkt-Schicht nicht zur Überschreitung der gewünschten Klinkertemperatur führt, die Mischung pelletiert wird, die Grünpellets auf einen Wanderrost chargiert werden, durch das Pellet-Bett heiße sauerstoffhaltige Gase von 500 - 900°C mit einem Unterdruck von 8-20 mbar geleitet werden, bis mindestens die oberste Schicht des Pellet-Bettes auf die Temperatur der heißen Gase aufgeheizt ist, anschließend heiße sauerstoffhaltige Gase von 1100 - 1160° C mit einem Unterdruck von 15-40 mbar durch das Pellet-Bett geleitet werden, bis die obere Schicht geklinkert ist, danach kalte Gase durch das Pellet-Bett geleitet werden, nach dem Abwurf die geklinkerte Produkt-Schicht von der darunter liegenden Schicht durch Siebung getrennt wird, und das Material der Unterschicht nach einer Zerkleinerung als Rückgut zurückgeführt wird.

Solche Schlämme fallen insbesondere beim Ausbaggern von Häfen oder Flüssen an und werden auch als Schlick bezeichnet. Ihre Trockensubstanz besteht hauptsächlich aus mineralischen Stoffen und bis zu etwa 10 % aus organischen Stoffen, bezogen auf trockene Substanz. Sie enthalten Schwermetalle, wie Blei, Zink, Cadmium, Chrom usw. Ihr Wassergehalt liegt im allgemeinen über 60 %. Durch Entwässern kann der Wassergehalt zwar gesenkt werden, liegt aber immer noch sehr hoch. Diese Schlämme ergeben wegen ihres hohen Wassergehaltes und ihres Gehaltes an Schwermetallen und organischen Bestandteilen beträchtliche Deponie-Probleme.

Aus der DE-OS 36 02 562 ist ein Verfahren zur Herstellung von festen Agglomeraten aus solchen Schlämmen bekannt, wobei der stichfeste Schlamm mit einem Wassergehalt von 40 - 65 % mit trockenem Rückgut in einem solchen Verhältnis gemischt wird, daß der Wassergehalt in der Mischung 20 - 30 % beträgt, und daß der Gehalt an organischen Bestandteilen bei vollständiger Verbrennung in der Produkt-Schicht nicht zur Überschreitung der gewünschten Klinkertemperatur führt, die Mischung pelletiert wird, die Grünpellets auf einen Wanderrost chargiert werden, durch das Pellet-Bett heiße sauerstoffhaltige Gase von 500 - 900 °C geleitet werden, bis mindestens die oberste Schicht des Pellet-Bettes auf die Temperatur der heißen Gase aufgeheizt ist, anschließend heiße sauerstoffhaltige Gase von 1100 - 1160°C durch das Pellet-Bett geleitet werden, bis die obere Schicht des Bettes geklinkert ist, danach kalte Gase durch das Bett geleitet werden, nach dem Abwurf die geklinkerte Produkt-Schicht von der darunter liegenden Schicht getrennt wird, und die darunter liegende Schicht als trockenes Rückgut mit dem Schlamm gemischt wird. Der Gehalt an organischen Bestandteilen ist auf trockenen Schlamm bezogen. Der maximal zulässige Gehalt an organischen Bestandteilen richtet sich nach dem Brennwert der organischen Bestandteile und der dadurch bei seiner Verbrennung in der später als geklinkertes Produkt abgeführten Produkt-Schicht entstehenden Verbrennungstemperatur. In dieser Produkt-Schicht darf die maximal gewünschte Klinkertemperatur nicht überschritten werden. Die Menge des Rückgutes beträgt je nach Wassergehalt und/oder Gehalt an organischen Bestandteilen 200 - 350 %, bezogen auf trockenen Schlamm. Die Höhe des Pellet-Bettes kann 30 - 40 cm betragen. Als unterste Schicht kann Rostbelag aus geklinkerten Pellets aufgegeben werden. Die Durchleitung der heißen Gase von 500 - 900°C erfolgt von oben nach unten so lange, bis mindestens die oberste Schicht auf die Gastemperatur aufgeheizt ist. Die Temperatur der heißen sauerstoffhaltigen Gase wird vorzugsweise so gewählt, daß in Abhängigkeit von der Verbrennungswärme der organischen Bestandteile in der oberen Schicht die Temperatur in den Pellets 950°C nicht überschreitet. Das Durchsaugen der Gase durch das Bett erfolgt mit einem Unterdruck von etwa 8 - 20 mbar. Anschließend werden heiße sauerstoffhaltige Gase von 1100 - 1160°C so lange durch das Bett geleitet, bis die obere Schicht geklinkert ist. Das Durchsaugen dieser Gase erfolgt mit einem Unterdruck von etwa 15 - 40 mbar. Die Temperatur die heißen Gase und die Dauer der Behandlung werden so eingestellt, daß eine Keramisierung der Pellets in der oberen Schicht eintritt, eine Verschlackung von niedrigschmelzenden Bestandteilen und eine Reduktion von Metallverbindungen jedoch möglichst vermieden wird. Die meisten Schwermetalle werden vollständig oder zu über 90 % eingebunden. Der Rest kann mit relativ geringem Aufwand aus den Abgasen abgeschieden werden. Die organischen Bestandteile in der oberen Schicht werden praktisch vollständig entfernt. Die obere Schicht ist geklinkert, wenn die unteren Pellets dieser Schicht eine Temperatur von etwa 1100 - 1130°C aufweisen. Die anschließende Kühlung des Bettes erfolgt im allgemeinen mittels Luft. Nach dem Abwurf vom Wanderrost wird das Material der Unterschicht von dem Material der Oberschicht getrennt. Da die geklinkerte Oberschicht teilweise in Form von miteinander verbundenen Pellets anfällt, während die getrocknete und teilweise geklinkerte Unterschicht weitgehend in Form von einzelnen Pellets, Pelletsbruch und Abrieb besteht, kann die Trennung durch entsprechende Siebung erfolgen. Das Material der Unterschicht wird auf die für das Rückgut erforderliche Korngröße zerkleinert. Falls die Menge nicht ausreicht, wird ein entsprechender Teil von geklinkertem Material zusätzlich zerkleinert. Nach diesem Verfahren können die organischen Bestandteile der Schlämme weitgehendst zu $CO_2$ und $H_2O$ verbrannt werden. Die Verbrennungswärme kann im Prozeß genutzt werden. Die Schwermetalle sind im geklinkerten Produkt mineralisch eingeschlossen und liegen damit in nicht auslaugbarer Form vor. Das Produkt kann sehr gut deponiert oder als Baustoff oder Füllstoff verwendet werden. Etwaige geringe Mengen an verflüchtigten Schwermetallen können aus dem Abgas abgeschieden werden. Die Verbrennungswärme der organischen Bestandteile wird im Prozeß weitgehend ausgenutzt, die Durchsatzleistung ist hoch, die Gasmengen sind relativ niedrig und es kann ein Schlamm mit hohem Wassergehalt verarbeitet werden. Voraussetzung ist jedoch eine möglichst saubere Abtrennung der Pellets der geklinkerten oberen Schicht von der unteren Schicht. Diese saubere Trennung ist jedoch in manchen Fällen nicht möglich, da die geklinkerte obere Schicht nur teilweise in Form von miteinander verbundenen Pellets anfällt.

Der Erfindung liegt die Aufgabe zugrunde, bei diesem Verfahren eine saubere Trennung von Oberschicht und Unterschicht mit möglichst einfachen Mitteln zu erreichen.

Die Lösung dieser Aufgabe erfolgt erfindungsgemäß dadurch, daß aus der Mischung von stichfestem Schlamm und trockenem Rückgut Pellets mit kleinerem Durchmesser im Bereich von 3-15 mm und Pellets mit größerem Durchmesser im Bereich von 8-30 mm hergestellt werden, die Pellets mit kleinerem Durchmesser als untere Schicht und die Pellets mit größerem Durchmesser als obere Schicht mit einer Schichthöhe im Bereich von 7-15 cm auf den Wanderrost chargiert werden, nach dem Abwurf vom Wanderrost die Pellets mit größerem Durchmesser abgesiebt und als Produktion abgeführt werden, die Pellets mit kleinerem Durchmesser auf Rückgut-Korngröße zerkleinert und als Rückgut zurückgeführt werden.

Die Pelletierung kann in einer Pelletiertrommel oder auf einem Pelletierteller erfolgen. Bei der Verwendung einer Trommel können beide Pelletgrößen in einer einzigen Trommel hergestellt werden, wobei dann eine Absiebung der beiden Pelletgrößen erfolgt, oder jede Pelletgröße wird in einer separaten Trommel hergestellt. Bei der Verwendung von Pelletiertellern wird jede Pelletgröße auf einem separaten Teller hergestellt. Es können mehrere Trommeln oder Teller parallel geschaltet werden. Die Größe der Pellets mit kleinerem Durchmesser liegt im Bereich von 3 - 15 mm, und die Größe der Pellets mit größerem Durchmesser liegt im Bereich von 8 - 30 mm, mit der Maßgabe, daß der Durchmesser der größeren Pellets in jedem Fall größer sein muß. Das Kornband der Pellets in den beiden Fraktionen soll möglichst eng sein. Zur Erzielung einer guten Trennung der beiden Fraktionen nach dem Abwurf vom Wanderrost ist ein Abstand zwischen den beiden Größen notwendig. Die Zerkleinerung der abgesiebten kleineren Pellets erfolgt auf eine Rückgut-Korngröße unter 3 mm. Wenn die Zerkleinerung auf eine Korngröße von etwa 2 - 3 mm erfolgt, kann das Feinkorn vor der Zerkleinerung abgesiebt werden und unter Umgehung der Zerkleinerung direkt als Rückgut zurückgeführt werden. Wenn eine weitergehende Zerkleinerung erfolgt, z.B. auf eine Korngröße unter 0,5 mm, dann ist eine vorherige Absiebung von Feinkorn nicht zweckmäßig, da sie schwierig und aufwendig wäre. Das Verhältnis von Schichthöhe der Pellets mit größerem Durchmesser zu Schichthöhe der Pellets mit kleinerem Durchmesser wird bestimmt durch die erforderliche Menge an Rückgut, die von dem Gehalt des Schlammes an Wasser und organischen Bestandteilen abhängig ist. Die Schichthöhe der Pellets mit größerem Durchmesser, d.h. der Produktpellets, wird im Bereich von etwa 7 - 15 cm gehalten. Vor der Behandlung der Beschickung mit den heißen sauerstoffhaltigen Gasen von 500 - 900°C erfolgt vorzugsweise eine Trocknung der Pellets mit warmen Gasen. Die Trocknung erfolgt vorzugsweise zunächst als Drucktrocknung, wobei die warmen Gase von unten nach oben durch das Pellet-Bett gedrückt werden und anschließend als Saugtrocknung, wobei die warmen Gase von oben nach unten durch das Pellet-Bett gesaugt werden. Das durch die Zwischenräume der Rollen fallende Unterkorn wird wieder als Rückgut zurückgeführt. Ansonsten werden die Verfahrensbedingungen des eingangs geschilderten Verfahrens eingehalten.

Eine vorzugsweise Ausgestaltung besteht darin, daß die Pellets mit größerem Durchmesser und die Pellets mit kleinerem Durchmesser auf je einem Pelletierteller hergestellt werden. Diese Herstellung hat den Vorteil, daß die gewünschte Größe der beiden Pelletsorten genau eingehalten werden kann und jede Sorte nur ein kleines Kornband aufweist. Dadurch wird eine gute Trennung der gröberen Pellets von den kleineren Pellets nach dem Abwurf vom Wanderrost möglich.

Eine vorzugsweise Ausgestaltung besteht darin, daß der Durchmesser der kleineren Pellets 8 - 10 mm und der Durchmesser der größeren Pellets 15 - 18 mm beträgt. Diese Größen ergeben besonders gute Betriebsergebnisse.

Eine vorzugsweise Ausgestaltung besteht darin, daß die Pellets mit größerem Durchmesser in einer Schichthöhe von 8 - 12 cm auf den Wanderrost chargiert werden. Mit dieser Schichthöhe werden besonders gute Produkt-Pellets erzielt.

Eine vorzugsweise Ausgestaltung besteht darin, daß die Pellets mit Rollenrosten auf den Wanderrost chargiert werden und das zwischen den Rollen durchfallende Feinkorn als Rückgut in die Mischung zurückgeführt wird. Die Rollenroste ermöglichen eine schonende Aufgabe der frischen Grünpellets auf den Wanderrost und wirken gleichzeitig als Siebaggregate für Feinkorn.

Eine vorzugsweise Ausgestaltung besteht darin, daß die vom Wanderrost abgeworfenen und abgesiebten Pellets mit kleinerem Durchmesser auf eine Rückgut-Korngröße unter 0,5 mm zerkleinert werden. Diese Rückgut-Korngröße ergibt besonders gute Bedingungen für die Pelletierung und damit für das Gesamtverfahren.

Eine vorzugsweise Ausgestaltung besteht darin, daß aus dem vom Wanderrost abgeworfenen Material eine Fraktion abgesiebt und als Rostbelag zurückgeführt wird. Die Absiebung des Rostbelages erfolgt bei etwa 6 - 15 mm. Die Höhe des Rostbelages auf dem Wanderrost beträgt etwa 2 - 6 cm. Die Verwendung von Rostbelag ergibt eine Schonung des Wanderrostes und verbessert die Betriebsergebnisse.

Eine vorzugsweise Ausgestaltung besteht darin, daß die Fraktion für den Rostbelag mit einer Korngröße von 8 - 10 mm abgesiebt wird. Diese Korngröße ergibt besonders gute Betriebsbedingungen.

Die Erfindung wird anhand eines Beispieles näher erläutert.

Beispiel

Das Beispiel wurde anhand der Ergebnisse von Pfannenversuchen für einen Wanderrost berechnet.

26,1 t/h Hafenschlick mit einem Wassergehalt von 51,5 % werden mit 25 t/h Rückgut in einem Mischer gemischt. Die Mischung enthält 26,3 % Wasser. Auf einem ersten Pelletierteller werden Pellets mit einem Durchmesser von 8 bis 10 mm hergestellt. Auf einem zweiten Pelletierteller werden Pellets mit einem Durchmesser von 15 bis 18 mm hergestellt. Auf den Wanderrost werden zunächst 5,9 t/h Rostbelag in einer Schichtdicke von 5 cm aufgegeben. Auf den Rostbelag werden 36,4 t/h kleinerer Pellets mittels eines Rollenrostes in einer Schichtdicke von 22 cm aufgegeben. Auf diese Schicht werden 14,7 t/h größerer Pellets in einer Schichtdicke von 9 cm mittels eines Rollenrostes chargiert. Das durch die Rollenroste fallende Material wird wieder als Rückgut in den Mischer zurückgeführt. Die Trocknung der Pellets erfolgt zunächst für 2 min. in einer Drucktrocknungsstufe und dann für 2 min. in einer Saugtrocknungsstufe. Anschließend werden die größeren Pellets der oberen Schicht innerhalb 7 min. auf 900°C aufgeheizt und auf dieser Temperatur gehalten. Danach werden die größeren Pellets der oberen Schicht innerhalb 9 min. auf 1150°C aufgeheizt und auf dieser Temperatur gehalten. Die anschließende Kühlzeit beträgt 9 min. Die Kühlung erfolgt mittels Kühlluft, die von unten nach oben durch das Bett gedrückt wird. Die erwärmte Kühlluft aus dem letzten Teil der Kühlzone wird zum Teil in der Drucktrockungszone von unten nach oben durch die Beschickung gedrückt und dann mit dem restlichen Teil als Abluft abgeführt. Die heiße Kühlluft aus dem ersten Teil der Kühlzone wird in die Klinkerzone und die zweite Aufheizzone geleitet. Ein Teil des Abgases aus der Klinkerzone und aus dem letzten Teil der zweiten Aufheizzone wird in der Saugtrocknungszone und im ersten Teil der ersten Aufheizzone von oben nach unten durch die Beschickung gesaugt. Das Abgas aus der Saugtrocknungszone und der ersten Aufheizzone sowie die nicht rückgeführten Teile des Abgases aus der zweiten Aufheizzone und der Klinkerzone werden zu einer Nachverbrennung geleitet. Der Abwurf von dem Wanderrost beträgt 41 t/h und wird in einer ersten Absiebung bei einer Siebgröße von 10 mm abgesiebt. 10,1 t/h Pellets mit einer Korngröße über 10 mm werden als Produktion abgeführt. Das Material unter 10 mm wird in einer zweiten Absiebung bei einer Sieböffnung von 8 mm abgesiebt. Das Material mit einer Korngröße unter 8 mm wird als Rückgut in die Rückgutmühle geleitet. Die Pellets mit einer Korngröße von 8 bis 10 mm werden als Rostbelag zurückgeführt und eventueller Überschuß wird dem Rückgut zugegeben. In der Rückgutmühle erfolgt eine Zerkleinerung auf eine Korngröße unter 0,5 mm.

Die Vorteile der Erfindung bestehen darin, daß eine sehr genaue Trennung der größeren Pellets der oberen Schicht von den kleineren Pellets der unteren Schicht erfolgen kann. Dadurch wird vermieden, daß einerseits keramisierte Pellets der oberen Schicht in das Rückgut gelangen und andererseits Pellets aus der unteren Schicht, d.h. schwach gebrannte Pellets, in die Produktpellets gelangen. Dadurch wird die Qualität der Produkt-Pellets wesentlich gesteigert.

**Patentansprüche**

1. Verfahren zur Herstellung von festen Agglomeraten aus stichfesten mineralischen Schlämmen, die organische Bestandteile bis zu etwa 10 % enthalten, wobei der stichfeste Schlamm mit trockenem Rückgut in einem solchen Verhältnis gemischt wird, daß der Wassergehalt der Mischung einen für eine Pelletierung günstigen Wert erreicht und daß der Gehalt an organischen Bestandteilen in den Pellets bei vollständiger Verbrennung in der Produkt-Schicht nicht zur Überschreitung der gewünschten Klinkertemperatur führt, die Mischung pelletiert wird, die Grünpellets auf einen Wanderrost chargiert werden, durch das Pellet-Bett heiße sauerstoffhaltige Gase von 500 - 900° C mit einem Unterdruck von 8-20 mbar geleitet werden, bis mindestens die oberste Schicht des Pellet-Bettes auf die Temperatur der heißen Gase aufgeheizt ist, anschließend heiße sauerstoffhaltige Gase von 1100 - 1160°C mit einem Unterdruck von 15-40 mbar durch das Pellet-Bett geleitet werden, bis die obere Schicht geklinkert ist, danach kalte Gase durch das Pellet-Bett geleitet werden, nach dem Abwurf die geklinkerte Produkt-Schicht von der darunter liegenden Schicht durch Siebung getrennt wird, und das Material der Unterschicht nach einer Zerkleinerung als Rückgut zurückgeführt wird, dadurch gekennzeichnet, daß aus der Mischung von stichfestem Schlamm und trockenem Rückgut Pellets mit kleinerem Durchmesser im Bereich von 3-15 mm und Pellets mit größerem Durchmesser im Bereich von 8-30 mm hergestellt werden, die Pellets mit kleinerem Durchmesser als untere Schicht und die Pellets mit größerem Durchmesser als obere Schicht mit einer Schichthöhe im Bereich von 7-15 cm auf den Wanderrost chargiert werden, hach dem Abwurf vom Wanderrost die Pellets mit größerem Durchmesser abgesiebt und als Produktion abgeführt werden, die Pellets mit kleinerem Durchmesser auf Rückgut-Korngröße zerkleinert und als Rückgut zurückgeführt werden.

2. Verfahren nach Anspruch 1, dadurch gekennzeichnet, daß die Pellets mit größerem Durchmesser und die Pellets mit kleinerem Durchmesser auf je einem Pelletierteller hergestellt werden.

3. Verfahren nach Anspruch 1 oder 2, dadurch gekennzeichnet, daß der Durchmesser der kleineren Pellets 8 - 10 mm und der Durchmesser der größeren Pellets 15 - 18 mm beträgt.

4. Verfahren nach einem der Ansprüche 1 bis 3, dadurch gekennzeichnet, daß die Pellets mit größerem Durchmesser in einer Schichthöhe von 8 - 12 cm auf den Wanderrost chargiert werden.

5. Verfahren nach einen der Ansprüche 1 bis 4, dadurch gekennzeichnet, daß die Pellets mit Rollenrosten auf den Wanderrost chargiert werden und das zwischen den Rollen durchfallende Peinkorn als Rückgut in die Mischung zurückgeführt wird.

6. Verfahren nach einem der Ansprüche 1 bis 5, dadurch gekennzeichnet, daß die vom Wanderrost abgeworfenen und abgesiebten Pellets mit kleinerem Durchmesser auf eine Rückgut-Korngröße unter 0,5 mm zerkleinert werden.

7. Verfahren nach einem der Ansprüche 1 bis 6, dadurch gekennzeichnet, daß aus dem vom Wanderrost abgeworfenen Material eine Fraktion abgesiebt und als Rostbelag zurückgeführt wird.

8. Verfahren nach Anspruch 7, dadurch gekennzeichnet, daß die Fraktion für den Rostbelag mit einer Korngröße von 8 - 10 mm abgesiebt wird.

## Claims

1. A process of producing solid agglomerates from non-flowable mineral sludges, which contain up to about 10% organic components, wherein the non-flowable sludge is mixed with dry returns in such a ratio that the water content of the mixture has a value which is desirable for pelletizing and that a complete combustion of the organic content of the pellets does not cause the temperature in the product layer to rise above the desired clinkering temperature, whereafter the mixture is pelletized, the green pellets are charged onto a travelling grate, oxygen-containing hot gases at 500 to 900°C are passed through the bed of pellets under a vacuum of 8 to 20 millibars until at least the uppermost layer of the bed of pellets has been heated to the temperature of the hot gases, oxygen-containing hot gases at 1100 to 1160°C are subsequently passed through the bed of pellets under a vacuum of 15 to 40 millibars until the upper layer has been clinkered, cold gases are subsequently passed through the bed of pellets, after the discharge the clinkered product layer is separated by sieving from the underlying layer, and the material of the lower layer is disintegrated and is then recycled as returns, characterized in that pellets having a smaller diameter in the range from 3 to 15 mm and pellets having a larger diameter in the range from 8 to 30 mm are made from the mixture of non-flowable sludge and dry recycled material, the pellets which are smaller in diameter are charged as a lower layer and the pellets which are larger in diameter are charged as an upper layer having a height in the range from 7 to 15 cm onto the travelling orate, after the discharge from the travelling grate the pellets which are larger in diameter are sieved off and carried off as a product and the pellets which are smaller in diameter are disintegrated to the return particle size and are recycled as returns.

2. A process according to claim 1, characterized in that the pellets which are larger in diameter and the pellets which are smaller in diameter are made on different pelletizing disks.

3. A process according to claim 1 or 2, characterized in that the smaller pellets are 8 to 10 mm in diameter and the larger pellets are 15 to 18 mm in diameter.

4. A process according to any of claims 1 to 3, characterized in that the pellets which are larger in diameter are charged onto the travelling grate to form a layer having a height of 8 to 12 cm.

5. A process according to any of claims 1 to 4, characterized in that the pellets are charged onto the travelling grates by means of roller orates and the fines falling through between the rollers are recycled to the mixture as returns.

6. A process according to any of claims 1 to 5, characterized in that the pellets which are smaller in diameter and have been discharged from the travelling grate and sieved are disintegrated to a return particle size below 0.5 mm.

7. A process according to any of claims 1 to 6, characterized in that a fraction is sieved from the material that has been discharged from the travelling grate and said fraction is recycled as a grate-covering material.

8. A process according to claim 7, characterized in that the fraction for the grate-covering material is sieved off to have a particle size of 8 to 10 mm.


**Revendications**

1. Procédé de fabrication de produits agglomérés solides à partir de boues minérales consistantes, qui contiennent jusqu'à 10 % environ de constituants organiques, qui consiste à mélanger la boue consistante à du produit recyclé sec en un rapport tel que la teneur en eau du mélange atteigne une valeur propice à un bouletage et que la teneur en constituants organiques des boulettes, lors de la combustion complète, dans la couche formant le produit, ne provoque pas un dépassement de la température de clinkérisation souhaitée, à bouleter le mélange, à charger les boulettes à vert sur une grille mobile, à envoyer à travers le lit de boulettes des gaz chauds contenant de l'oxygène à une température de 500 à 900°C avec une dépression de 8 à 20 millibar jusqu'à ce qu'au moins la couche la plus élevée du lit de boulettes soit portée à la température des gaz chauds, à envoyer ensuite des gaz chauds contenant de l'oxygène à une température de 1100 à 1160°C avec une dépression de 15 à 40 millibar à travers le lit de boulettes jusqu'à ce que la couche supérieure soit clinkérisée, à envoyer ensuite des gaz froids à travers le lit de boulettes, à séparer, après le déchargement, la couche clinkérisée formant le produit de la couche sous-jacente par criblage, et à renvoyer la matière constituant la couche inférieure, après une fragmentation, en tant que produit recyclé, caractérisé en ce qu'il consiste à fabriquer, à partir du mélange de boue consistante et de produit recyclé sec, des boulettes ayant un petit diamètre de l'ordre de 3 à 15 mm et des boulettes ayant un grand diamètre de l'ordre de 8 à 30 mm, à charger les boulettes de petit diamètre en tant que couches inférieures et les boulettes de grand diamètre en tant que couches supérieures avec une hauteur de couche de l'ordre de 7 à 15 cm sur la grille mobile, à séparer, après le déchargement de la grille mobile, les boulettes de grand diamètre par criblage et à les évacuer en tant que production et à fragmenter les boulettes de petit diamètre à la granulométrie du produit recyclé et à les retourner en tant que produit recyclé.

2. Procédé suivant la revendication 1, caractérisé en ce qu'il consiste à préparer les boulettes de grand diamètre et les boulettes de petit diamètre respectivement sur un plateau de bouletage.

3. Procédé suivant la revendication 1 ou 2, caractérisé en ce que le diamètre des petites boulettes est compris entre 8 et 10 mm et le diamètre des grandes boulettes est compris entre 15 et 18 mm.

4. Procédé suivant l'une des revendications 1 à 3, caractérisé en ce qu'il consiste à charger les boulettes de grand diamètre en une hauteur de couche de 8 à 12 mm dans la grille mobile.

5. Procédé suivant l'une des revendications 1 à 4, caractérisé en ce qu'il consiste à charger les boulettes avec des grilles à rouleaux sur la grille mobile, et à retourner le grain fin se produisant entre les rouleaux en tant que produit de recyclage dans le mélange.

6. Procédé suivant l'une des revendications 1 à 5, caractérisé en ce qu'il consiste à fragmenter les boulettes de petit diamètre déchargées de la grille mobile et séparées par criblage jusqu'à une granulométrie du produit recyclé inférieure à 0,5 mm.

7. Procédé suivant l'une des revendications 1 à 6, caractérisé en ce qu'il consiste à séparer par criblage une fraction de la matière déchargée de la grille mobile et à la retourner comme couche de grille.

8. Procédé suivant la revendication 7, caractérisé en ce qu'il consiste à séparer par criblage la fraction pour la couche de grille à une granulométrie de 8 à 10 mm.